# EUROPEAN PATENT SPECIFICATION

(11) **EP 2 599 573 B1**
(45) Date of publication and mention of the grant of the patent: **04.03.2015**
(21) Application number: 12193970.6
(22) Date of filing: 23.11.2012
(51) Int. Cl.: B22D 11/126, B23K 7/10, F23D 14/38, F23Q 3/00, B23K 7/00

(54) **An oxycutting system and a pilot flame device for said system**
Brennschneidanlage und Zündflamme-Vorrichtung
Système d'oxycoupage et dispositif de flamme pilote

(30) Priority: 30.11.2011 IT MI20112182
(43) Date of publication of application: 05.06.2013
(73) Proprietor: A.L.B.A. S.r.l., 16153 Genova (IT)
(72) Inventor: D'Ottavi, Riccardo, 16153 GENOVA (IT); Pirozzi, Franco, 16153 GENOVA (IT)
(74) Representative: Kratter, Carlo

(56) References cited:
- JP-A- 4 066 272
- JP-A- 8 110 048
- JP-A- 9 024 464
- JP-A- 9 141 424
- JP-A- 9 285 863
- JP-A- 11 030 409
- US-B1- 6 787 731
- William Johnson, Kevin Standiford: "Practical Heating Technology 2nd Edition", 28 August 2009 (2009-08-28), Delmar, Cengage Learning, Clifton Park, New York, XP002690449, ISBN: 9781418080396 * 7.12 Flame Recitification; page 136 - page 137 *

## Description

The present invention relates to an oxycutting system comprising an oxycutting device and a device for generating a pilot flame for igniting said oxycutting device, in accordance with the characterising part of the independent claims.

In the present context, an oxycutting device means the usual oxycutting torches used for some considerable time in oxycutting machines, for example in the machine manufactured and marketed by the same applicant. Known oxycutting devices are usually used for cutting billets, blooms, thick slabs, and beam blanks, and are preferably mounted on carriages provided for example in continuous casting plants. Known oxycutting systems also comprise a device for generating a pilot flame arranged to "ignite" the oxygen mixture of the oxycutting device when this latter is to be used. Although known oxycutting systems, and in particular pilot flame devices, have been in use for several decades they present numerous drawbacks which have not yet been resolved. A first technical problem of known pilot flame devices is linked to the fact that the flame can become extinguished, for example if the flame comes into contact with possible water sprays and/or because of air flows within the cutting zone, in particular in continuous casting plants. If the pilot flame is extinguished it is impossible to ignite the oxycutting device when this is to be used, and if the system is used in continuous casting it may be necessary to halt a casting line, with evident serious consequences. The flame restart in the pilot flame device is also dangerous and uncomfortable, in particular in continuous casting plants, as it requires the intervention of specialized personnel who have to approach the device in order to then manually reignite said flame.

For igniting an oxycutting device, JP 9 024464 A, which discloses the preamble of claim 1, describes pilot flame generating devices of the type comprising an element for feeding to a nozzle a combustible mixture for feeding said pilot flame generated at said nozzle, and members for automatically sensing the presence of a preheating flame in the oxycutting device; wherein said sensing members comprise an infrared sensor. JP 9 024464 A also describes the automatic ignition of the combustible mixture feeding the pilot flame. According to this prior patent, the infrared sensor is arranged to measure the temperature of the pilot flame nozzle and also of the oxycutting torch nozzle. According to this previous patent once the oxycutting torch is ignited, the pilot flame is extinguished. With regard to sensing the presence of the pilot flame, said sensor only gives an indirect indication of the pilot flame presence (in fact it measures the temperature to which the pilot flame has heated the relative nozzle) and only in an initial phase of the oxycutting torch ignition (the pilot flame is extinguished after torch ignition). This sensor cannot be used if the oxycutting torch flame is accidentally extinguished and is required to be immediately reactivated, as the pilot flame nozzle is already at a high temperature (due to the heating induced by the oxycutting torch flame on the pilot flame nozzle) independently of the presence or absence of the pilot flame.

Finally, the sensor of the prior patent under examination is not reliable, is not able to sense the presence of the pilot flame during reignition of the oxycutting torch, and cannot be used in continuous casting plants, i.e. when the products to be cut are at high temperature, for example a temperature between about 700°C and 1000°C.

JP 8 110048A describes an oxycutting system comprising an oxycutting device and a device arranged to generate a pilot flame for igniting a combustible mixture at a nozzle of said oxycutting device, said system comprising members for automatically sensing the presence of a preheating flame at said nozzle of said oxycutting device, and an automatic system for igniting the pilot flame which continues to attempt to ignite said flame until said sensing members have sensed the complete formation of said preheating flame at the nozzle of the oxycutting device. This prior patent neither describes nor suggests the provision of sensing members for sensing the presence/absence of the pilot flame, but only the ignition/extinguishing of the oxycutting torch.

JP 11 030409A describes an oxycutting system comprising an oxycutting device and a device arranged to generate a pilot flame for igniting a combustible mixture at a nozzle of said oxycutting device; this known art document mentions the problem of automatic ignition of the oxycutting device and the use of a sensor for misfire detecting. This prior patent neither describes nor suggests the provision of sensing members for sensing the presence/absence of the pilot flame, but only the ignition/extinguishing of the oxycutting torch.

JP 9 285863 describes an oxycutting system comprising an oxycutting device and a device arranged to generate a pilot flame for igniting a combustible mixture at a nozzle of said oxycutting device; this known art document mentions the problem of automatic ignition of the oxycutting device and the use of a sensor for misfire detecting which detects that a flame is formed in said nozzle, and cutting is performed. This prior patent also describes the provision, inside a tubular part of the pilot flame generating device, of a sparking rod electrically insulated from the walls of said tubular part and arranged to ignite said pilot flame. This prior patent neither describes nor suggests the provision of sensing members for sensing the presence/absence of the pilot flame, but only the ignition/extinguishing of the oxycutting torch.

JP 4 066272 describes an oxycutting torch comprising a member for sensing torch extinguishing by measuring the temperature at a nozzle of said torch. This prior patent neither describes nor suggests the provision of sensing members for sensing the presence/absence of the pilot flame, but only the ignition/extinguishing of the oxycutting torch.

JP 9 141424A describes an oxycutting system comprising an oxycutting torch, a member for automatically igniting said torch, a member for sensing the flame in said torch and the consequent torch ignition, and a CCD camera for measuring the characteristics of the flame emitted by said torch. This prior patent neither describes nor suggests the provision of sensing members for sensing the presence/absence of the pilot flame, but only the ignition/extinguishing of the oxycutting torch.

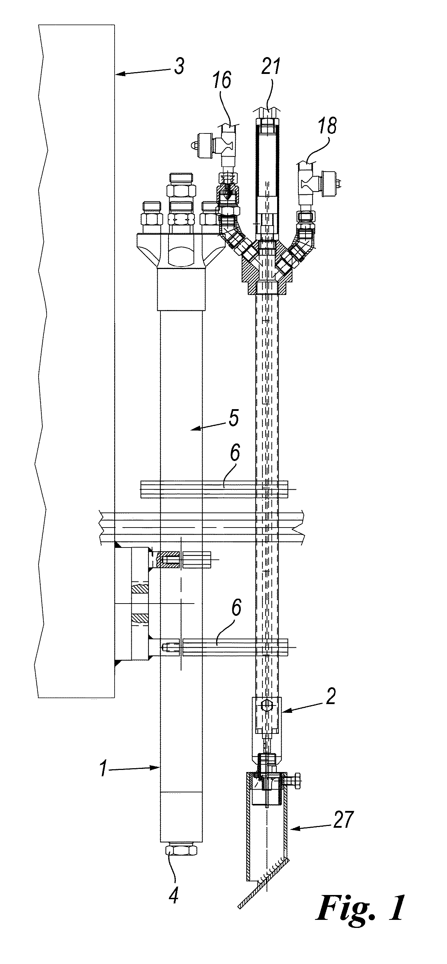

All the devices of the aforestated prior patents can be used only in cutting plants for products at ambient temperature, such as cold sheet metal cutting plants, but cannot be used in plants for cutting products at high temperature (for example temperatures between 700°C and 1000°C), such as continuous casting product temperatures. Flame sensing devices of the prior art cannot function at continuous casting working temperatures (i.e. at temperatures in which the product to be cut is at a temperature between 700°C and 1000°C). An object of the present invention is to provide an oxycutting system comprising an oxycutting device and a device arranged to generate a pilot flame for igniting said oxycutting device which overcomes the aforesaid drawbacks and which in particular is able to reliably ensure the continuous presence of the flame in pilot flame devices, and which enables a system and a device to be produced which are of a smaller bulk and with a lesser number of components than corresponding systems and devices of the known art.A further object of the present invention is to provide an oxycutting system comprising an oxycutting device and a device arranged to generate a pilot flame for igniting said oxycutting device which can be used in a continuous casting plant, i.e. in a plant for cutting manufactured products having a high temperature (greater than 600°C).These and other objects which will be apparent to the expert of the art are attained by a system and device in accordance with the characterising part of the main claim.The present invention will be more apparent from the accompanying drawings, which are provided by way of non-limiting example and in which:Figure 1 is a lateral schematic view of a usual oxycutting carriage, comprising an oxycutting system according to the invention,

Figure 2 is a lateral schematic view of a pilot flame device according to the invention,

Figure 3 is a sectional schematic view of a first detail thereof,Figures 4A and 4B are a lateral schematic view of a second detail thereof, shown in a disassembled and assembled state,Figure 5 shows a scheme of the system control devices.

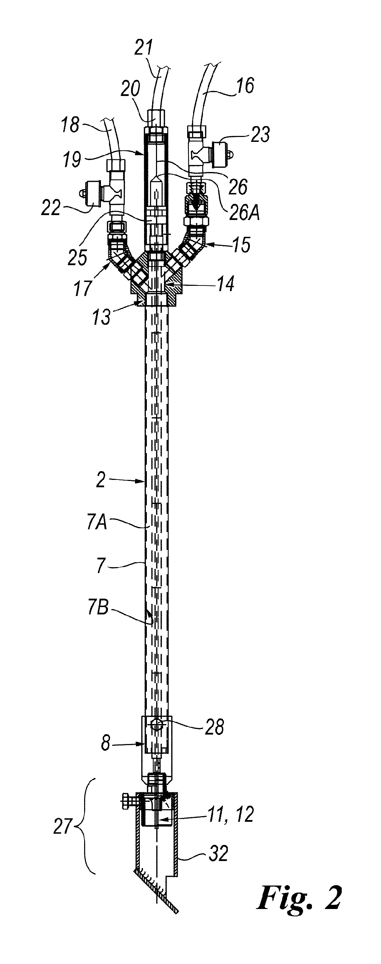

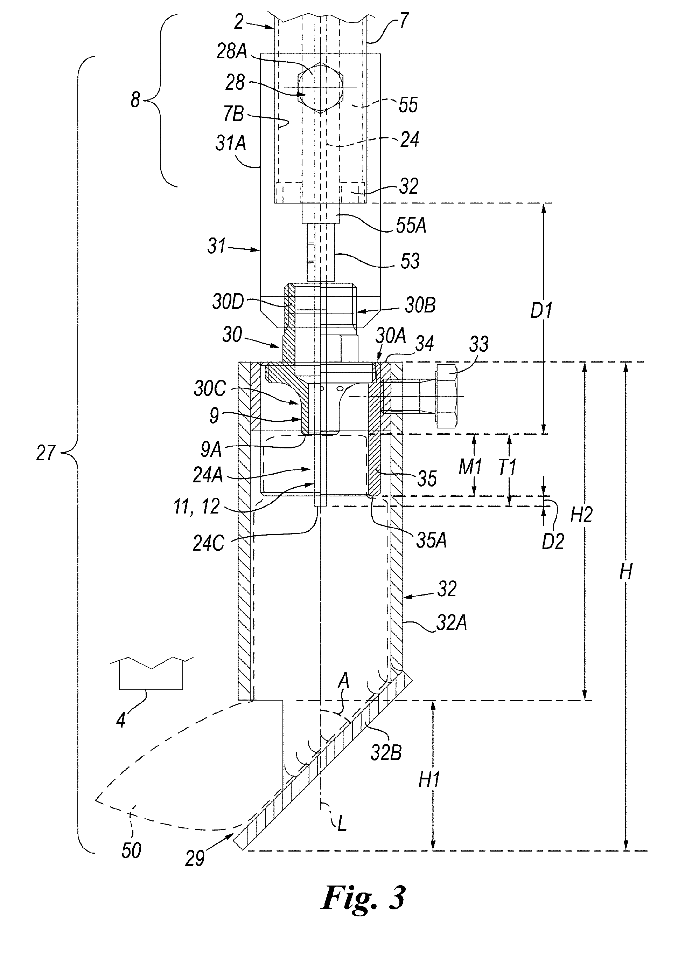

The figure 1 shows a schematic view of an oxycutting system comprising an oxycutting device 1 and a device 2 arranged to generate a pilot flame for igniting said oxycutting device; the system is associated with a conventional handling device for driving the system into a position corresponding with the element to be cut (not shown) and to operate it for making the cut. The oxycutting device 1 is of conventional type to the expert of the art and will therefore not be described in detail hereinafter; it has a tubepiece or blowtorch 5 having at a lower end a nozzle 4 for the exit of the oxygen based mixture to be ignited by the pilot flame of the pilot flame device 2. This latter is preferably rigidly connected to the tubepiece 5 of the oxycutting device 1, such as to form a single body with this latter, for example by means of connection bars 6.The pilot flame device 2, better represented in Figures 2-3-4, preferably presents at least one hollow tubular elongate element 7 for passage into its interior of a combustible mixture feeding a pilot flame (indicated by dashed lines with the number 50 in Figure 3).

The elongate element 7 comprises at a first end 8 a nozzle 9 (Figure 3) for the exit of the combustible mixture, a terminal element 27 provided at and below said nozzle 9 for protecting the pilot flame, and means 11 for sensing the presence of said pilot flame.

Advantageously, means 12 are also provided at the nozzle 9 for automatically igniting the mixture to generate the pilot flame 50.

More particularly, the elongate tubular element 7 presents at its upper end a three-way element 14 rigidly connected to said end, for example by a threaded connection, and presenting: a first 15 and a second 17 tubular element for sealedly connecting to said first end 13 a first conduit 16 and a second conduit 18, respectively, for feeding a combustible gas, for example methane gas and air, preferably forced air, into the internal cavity 7A of the tubular element 2, a third tubular element 19 housing certain components, described in detail hereinafter, of the ignition means 12 and sensing means 11, and a connection member 20 for an electric cable 26.

The tubular element 2 and the three-way tubular element 14 are made of conventional materials and with the usual finishes for components able to withstand the serious conditions present in a continuous casting plant.

Preferably the tubular elements 15 and 17 comprise usual manual valves 22, 23 for regulating the flow rate of the combustible gas and forced air entering the tubular element 7.

The sensing means 11 and ignition means 12 comprise an electrically conductive element 24 passing through and housed within the cavity 7A of the tubular element 7, and insulated from the inner wall 7B (Figure 3) of said cavity by electrically insulating elements 55.

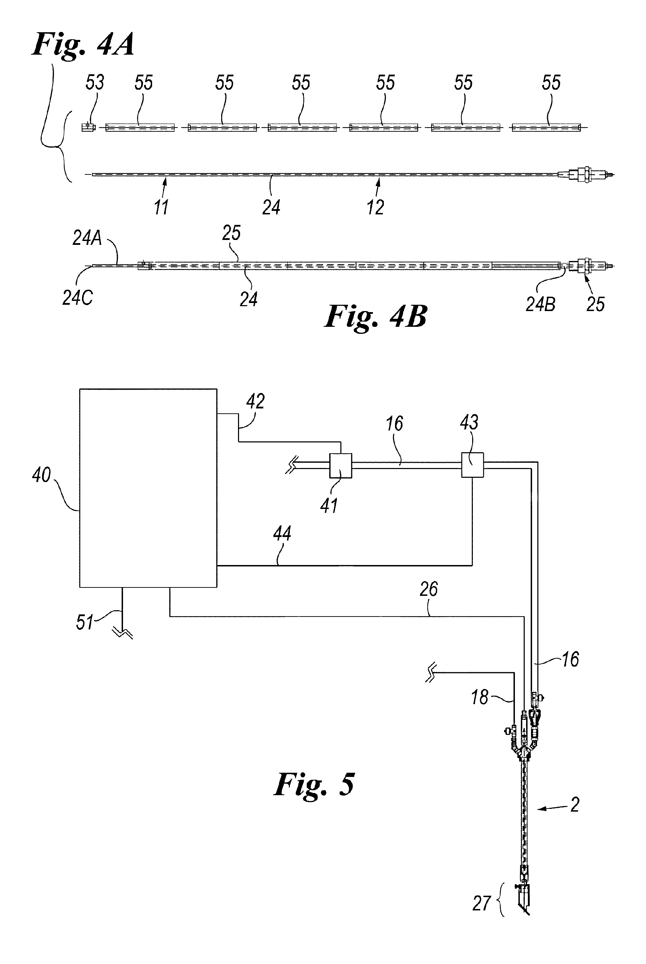

Advantageously the electrically conductive element 24 comprises a metal rod having a diameter between 1 and 5 mm and preferably 3 mm, while the insulating elements 55 comprise a plurality of tubes of an electrically insulating material, for example ceramic, to be drawn about the rod 24, as shown in Figure 4B.

Preferably the electrically conductive element 24 comprises a lower portion 24A and an upper portion 24B (Figure 4B). The upper portion 24B is secured and electrically connected to an ignition element 25 of "spark-plug" type connected upperly, via an element 26A (Figure 2), to the electric cable 26, held in position by the socket 20 and sheathed in the protection sheath 21, such that all those components connected to the rod 24 are all electrically connected together and electrically insulated both from the tubular element 7 and from the upper element 19.

The ignition member 25 is for example of the type marketed under the brand name Kromschroder of the company Elster and transmits to the lower end 24C (Figure 3) of the rod 24 a high voltage such that, as explained hereinafter, the potential difference causes a spark to strike such as to ignite the combustible mixture leaving the nozzle 9.

The pilot flame device 2 comprises lowerly the terminal element 27, presenting means 28 for removably associating it with the lower end (Figure 3) of the tubular element 7. The terminal element 27 comprises a lower box element 32 open at a lower aperture 29 for exit of the flame 50, and closed upperly by an intermediate piece 30 presenting the nozzle 9, which is secured to a part 31 connecting the terminal element to a lower portion of the tubular element 7.

More particularly, the box element 32 comprises a lateral wall 32A, for example of tubular shape, partially closed lowerly by a base wall 32B preferably inclined to the axis L of said wall 32A by an angle A between 1° and 90° and preferably about 60°, such as to optimally direct the flame 50 towards the nozzle 4 of the oxycutting device. The aperture 29 advantageously has a height H1 of between about 1/2 and 1/8 of the height H of the wall 32A and preferably of about 1/6, and extends through an arc of between about 45° and 180° of the circumference of said part, and preferably about 90°. In this manner, as explained hereinafter, the flame is initially enclosed within a chamber of adequate dimensions, sufficient to generate on the terminal portion 24C of the rod a flame sufficient and able to generate by ionization a current within the rod itself.

Advantageously the height H2 of the chamber before the aperture 29 is between 50 mm and 70 mm and is preferably about 60 mm. The lateral wall 32A is preferably removably connected, for example by a screw connection 33, to a clamping spacer ring 34, and to a sleeve element 35 coaxial to the wall 32A and secured, for example by a thread, to an annular portion 30A of the intermediate piece 30. Advantageously, the sleeve element 35 extends below the mouth 9A of the nozzle 9 by a length M1 between 5 mm and 20 mm and preferably 10 mm such as to ensure, as explained hereinafter, an optimal ignition of the pilot flame.

By virtue of the removable connection of the box element 32 to the intermediate piece, on the one hand said element can be positioned such that its aperture 29 is correctly positioned relative to the nozzle 4 of the oxycutting device, and on the other hand when the pilot flame device is inactive said element can be removed to clean it and/or check the state of the nozzle and/or of the terminal portion 24C of the rod 24.

The intermediate piece 30 comprises a tubular upper part 30B, the annular central part 30A, and a lower part 30C presenting the nozzle 9. The upper part 30B and the lower part 30C preferably have a diameter which decreases downwards and is less than the internal diameter of the tubular element 7. The upper part 30B upperly presents a thread 30D for connection to the part 31 connecting the terminal element 27 to a lower portion of the tubular element 7.

The connection part 31 comprises a tubular element 31A dimensioned such as to be mounted gas-tight about a lower portion of the tubular element 7. The connection part 31 comprises the connection means 28 which are advantageously of the type comprising a screw 28A, and enabling the distance D1 between the lower edge 9 of the tubular element 7 and the mouth 9A of the nozzle 9 to be varied, consequently varying the length T1 of that portion of the rod 24 which projects from said mouth.

Advantageously, in its terminal part the rod 24 is maintained coaxial to the tubular element 7 by a first bush 32 in contact with the outer wall of a lower terminal portion 55A of the insulating ceramic element 55 and also protected by a further lower bush 53.

According to the invention, the terminal part 24A of the rod 24 projects by a section T1 from the mouth 9A of the nozzle 9 for exit of the combustible mixture for the flame, the section T1 having a length between 8 mm and 23 mm and preferably about 13 mm. In this respect it has been verified experimentally that, as will be further explained hereinafter, for correct sensing of the flame presence, it is advantageous if a terminal portion of the rod 24 is stably and constantly surrounded by the pilot flame.

Again according to the invention, to ensure reliable ignition of the combustible mixture the lower free end 24C of the rod 24 should advantageously be at a predetermined distance D2 from the lower edge 35A of the sleeve element 35, this distance D2 being preferably between 1 and 5 mm and preferably equal to about 3 mm.

Advantageously to optimize the dimensioning and bulk of the pilot flame device, the tubular element 7, the rod 24 and the nozzle 9 are all coaxial to each other and to the longitudinal axis L of the tubular element 7, with the rod 24 being provided in the interior of the tubular element 7 and passing through the nozzle 9.

Figure 5 shows a simplified scheme of the regulation and control system of the pilot flame device; this regulation and control system comprises a control unit 40 connected - via a first line 42 and a second line 44 respectively to a pressure switch 41 and to a valving member 43 both provided in the gas feed line 16 to the pilot flame device - to the cable 26 connected via the socket 20 to the rod 24, and connected to an electrical feed cable 51.

According to the invention, when the system is operative, the pilot flame device must constantly present a pilot flame to be thus always ready to ignite the oxycutting device, and the presence of this flame must be constantly monitored. For this purpose, when the pilot flame is present the control unit 40 receives an electrical signal generated by the ionization effect of the flame 50 striking and surrounding the terminal part of the rod 24. This ionization effect generates in the rod 24 a current of low intensity, for example of the order of 1-30 µA, preferably between 10/12 µA for optimal reading, which is fed via the rod 24, the spark-plug 25 and the cable 26 to an inlet of the control unit 1. The control unit verifies, preferably continuously, the presence of the electrical signal originating from the rod 24, the presence/absence of which indicates the presence/absence of the flame.

It should be noted that to achieve an adequate intensity of the current signal sensed by 24 the ratio of the gas to air producing the pilot flame 50 at the nozzle 9 is preferably close to the stoichiometric gas/air ratio for the gas concerned.

The air mixed with the combustible gas is preferably forced air, and preferably air having a pressure between 0.2 and 1 bar and preferably equal to about 0,6 bar. Moreover, again to ensure that the pilot flame generates the desired ionized current, the flame, at least at the terminal portion 24A of the rod 24, is advantageously substantially stable, i.e. is not influenced by external phenomena, for which purpose the box element 32 is provided, to form a chamber which protects the flame. For this purpose, the chamber preferably extends for a height H3 of between 1.5 and 5 times the height T1 of said terminal portion struck by the flame, and preferably equal to about 4 times this height.

If the control unit senses that the pilot flame is absent, it automatically reignites it. For this purpose the control unit, via the cable 26 and the ignition member 25, generates a high voltage (for example between 5 kV and 10 kV and preferably equal to 7.5 kV) which is transmitted through the rod 24 as far as its point 24C. In this manner, because of the potential difference between the point 24C and the lower edge 35A of the sleeve element 35 (which is at earth) a spark is generated which ignites the combustible mixture exiting the nozzle 9, to form the desired pilot flame.

Advantageously, by virtue of the fact that the terminal element can slide coaxially and is adjustable relative to the tubular element 7 as the terminal portion 24A of the rod 24 wears down, the end 24C of the rod can always be in the most suitable position by moving the terminal element upwards.

Preferably the control unit operates in accordance with the following steps:
a) verification of the presence of the pilot flame,
b) if the pilot flame is absent:
   b1) initially, by means of the pressure switch 41 of the gas feed line 16 to the pilot flame device, it verifies that gas is fed to said device; if this verification is positive it passes to the next step b2), otherwise it feeds an error signal such as that described in the following point b4),
   b2) it attempts to reignite the pilot flame by making a plurality of attempts (for example 4 attempts) in short sequence,
   b3) if it has not succeeded in reigniting the flame it closes the valving member 43 such as to block gas feed to the pilot flame device,
   b4) and feeds an error signal to a further control unit, not shown, which controls the oxycutting device and/or the overall device in which the system of the invention is inserted, for example, the control unit of a continuous casting line in which the system with the device unable to ignite the pilot flame is provided.

All the aforedescribed operations can be easily implemented in a control SW of a control unit of microprocessor type, which will not be described hereinafter.

Advantageously the pressure of the gas and air fed to the pilot flame device are regulated, for example manually, to predetermined values, within a central feed unit, not shown, for said components.

The gas feed to the pilot flame device is for example methane gas or the like.

Finally it should be noted that the embodiment described up to this point is provided by way of example only, and that numerous variants are possible, all falling within the same inventive concept. For example, in a simplified version the pilot flame device could comprise only the flame sensing means and not also the automatic ignition means. According to a further variant the flame sensing and ignition means could be each formed with a dedicated member and not with a single member performing both functions, as described up to this point. For example, a rod of the previously described type or an equivalent element could be provided for the ignition means and another for the sensing means. Likewise the previously described rod 24 could be replaced by equivalent means, for example by flexible insulated electric cables connected to the ignition member 25 and to a metal tip of type similar to the terminal portion 24A of the previously described rod 24. The tubular element 2 could also be replaced by a dedicated conduit for the gas and one for the air which flow together and are mixed in a nozzle of similar type to that previously described.

Finally it should be noted that the device arranged to generate a pilot flame for igniting an oxycutting device as heretofore described, and/or the oxycutting system comprising an oxycutting device and a device arranged to generate a pilot flame for igniting said oxycutting device as heretofore described are preferably used in a continuous casting plant, i.e. a plant in which the products to be cut are at a temperature greater than or equal to 700°C, but could also be used for cutting products at ambient temperature.

## Claims

1. A device (2) arranged to generate a pilot flame (50) for igniting an oxycutting device (1), of the type comprising:
- at least one tubular elongate element, comprising at a first end a nozzle for the exit of a combustible mixture, wherein said element is suitable for feeding to said nozzle (9) the combustible mixture for feeding said pilot flame (50) generated at said nozzle,
**characterised in that** it further comprises:
- means (11) for automatically sensing the presence of said pilot flame (50),
- and a control unit (40),
- said means (11) for automatically sensing the presence of said pilot flame (50) comprise an electrically conductive member (24) presenting a lower terminal portion (24A),
- said lower terminal portion (24A) being provided in a position corresponding with said nozzle (9) so as to be struck and surrounded by said pilot flame (50),
- said control unit (40) being connected to said means (11) for automatically sensing the presence of said pilot flame (50),
- and said control unit (40) being suitable for receiving an electrical signal generated by means of ionization by said pilot flame (50) in said terminal portion (24A) of said member (24), and being suitable for verifying the presence/absence of said electrical signal, the presence/absence of which is correlated to the fact that the pilot flame is present/absent.

2. A device as claimed in claim 1, **characterised by** comprising means (12) for automatically igniting the combustible mixture at the nozzle (9) to generate a pilot flame (50).

3. A device as claimed in claim 2, **characterised in that** the means (11) for sensing the presence of said pilot flame (50) and the means (12) for igniting said pilot flame (50) comprise the electrically conductive member (24) presenting the lower terminal portion (24A),
- said electrically conductive member (24) acting alternatively as a member for sensing the presence of the pilot flame or as a member for igniting said pilot flame,
- said electrically conductive member (24) being connected to the control unit (40) and having its upper terminal portion (24B) electrically connected to an ignition member (25) arranged to generate in the lower portion (24A) of said member (24) a spark which by igniting the combustible mixture exiting the nozzle (9) of the feed element (7) generates the pilot flame (50),
- and said control unit transmitting a signal for generating said spark.

4. A device as claimed in one of the preceding claims **characterised in that** the electrically conductive member (24) is an electrically conductive metal rod-like member (24) presenting at least one lower terminal portion (24A) at said nozzle (9).

5. A device as claimed in one of the preceding claims, **characterised in that** the lower terminal portion (24A) of the electrically conductive member (24) is a metal rod-like member provided below the nozzle (9);
said lower portion (24A) being provided in the interior of a box element (32) which is lowerly open.

6. A device as claimed in one of the preceding claims **characterised in that** the lower terminal portion (24A) of the electrically conductive member (24) is a metal rod-like member provided below the nozzle (9); said lower portion (24A) being provided in the interior of a box element (32), which is lowerly open to enable passage of the pilot flame when present.
- said box member comprising an ignition portion (35) connected to earth and which, when said pilot flame is not present and when a high voltage is fed to said rod-like portion (24A), is arranged to strike a spark between the end (24C) of said rod-like portion and said ignition portion (35A), such as to ignite the combustible mixture exiting the nozzle (9).

7. A device as claimed in one of the preceding claims **characterised in that** the lower terminal portion (24A) of the electrically conductive member (24) is a metal rod-like member provided below the nozzle (9); said lower portion (24A) being provided in the interior of a box element (32) which is lowerly open to enable passage of the pilot flame, said box element lowerly comprising an aperture for the pilot flame, said aperture being bounded lowerly by a base wall (32B) inclined to an axis (L) of a tubular lateral wall of said box element (32) by an angle between 0° and 90°, and/or said box element being connected to the nozzle (9) such as to form a single terminal element (27).

8. A device as claimed in one of the preceding claims, **characterised in that** the lower terminal portion (24A) of the electrically conductive member (24) is movable coaxially to the tubular element (7) such as to be able to adjust its position relative to an end portion (2A) of said tubular element (7).

9. A device as claimed in one of the preceding claims **characterised in that** the combustible mixture for the pilot flame (50) comprises a mixture of a combustible gas and air, the ratio of gas to air at the nozzle (9) being close to the characteristic stoichiometric gas/air ratio of said gas.

10. A device as claimed in one of the preceding claims **characterised in that** the at least one feed element comprises, for passage of the combustible mixture into its interior, a hollow tubular rectilinear elongate element (7) comprising at a lower end (8) a terminal element (27) comprising the nozzle (9) for exit of the combustible mixture which feeds the pilot flame (50),
- the nozzle being coaxial to the longitudinal axis (L) of said elongate element (7),
- the electrically conductive element (24) of the ignition means (12) and/or sensing means (11) being coaxial to said longitudinal axis (L) of said elongate element (7),
- said electrically conductive element (24) copenetrating said nozzle (9), and comprising a portion (24A) projecting lowerly from said nozzle,
- said rod-like member (24) being partially housed in the interior of said elongate element (7),
- said rod-like member (24) being electrically insulated from the inner wall (7B) of said elongate element (7).

11. An oxycutting system comprising an oxycutting device (1) and a device (2), according to one of claims 1-10, arranged to generate a pilot flame for igniting said oxycutting device.

12. A system as claimed in claim 11, **characterised by** being associated with a handling device for driving the system into a position corresponding with the element to be cut above it and to move it for making the cut.

13. A continuous casting plant **characterised by** comprising an oxycutting system in accordance with claim 11.

14. Method of using a device arranged to generate a pilot flame (50) for igniting an oxycutting device (1), according to one of the preceding claims 1- 10 **characterised in that** said devices comprises a control unit (40) comprising control and processing means for receiving a signal from flame sensing means (11), to hence verify on the basis of the value of said signal the presence/absence of said pilot flame, said processing and control means being able to verify, if the pilot flame is absent, that the combustible gas is fed to said pilot flame device, and:
- if said verification is positive, it activates ignition means (12) at least once to automatically reignite said pilot flame,
- otherwise, if said verification is negative, it generates a first alarm signal,
said processing and control means verifying if the ignition means (12) have been able to ignite said pilot flame, and if negative they block gas feed to the pilot flame device and generate a second alarm signal.

## Patentansprüche

1. Vorrichtung (2) zur Erzeugung einer Zündflamme (50), um eine Brennschneidanlage (1) anzuzünden, der Art umfassend:
- mindestens ein rohrförmiges, längliches Element, umfassend an einem Ende eine Düse zur Ausströmung einer Brennstoffmischung, worin das genannte Element für die Zuführung zu der genannten Düse (9)der Brennstoffmischung für die Versorgung der genannten Zündflamme (50) an der genannten Düse erzeugt, geeignet ist,
**dadurch gekennzeichnet, dass** sie weiter umfasst:
- Mittel (11) zur automatischen Erfassung der Anwesenheit der genannten Zündflamme (50),
- und eine Steuerungseinheit (40),
- wobei die genannte Mittel (11) zur automatischen Erfassung der Anwesenheit der genannten Zündflamme (50) ein elektrisch leitendes Element (24), das einen unteren endständigen Abschnitt (24A) aufweist, umfasst
- wobei der genannte untere endständige Abschnitt (24A) in einer der genannten Düse (9) entsprechenden Stellung vorhanden ist, so dass er von der genannten Zündflamme (50) getroffen und umgeben ist,
- wobei die Steuerungseinheit (40) mit den genannten Mitteln (11) zur automatischen Erfassung der Anwesenheit der genannten Flamme (50) verbunden ist,
- und wobei die genannte Steuerungseinheit (40) für die Aufnahme eines in dem genannten endständigen Abschnitt (24A) des genannten Elements (24) von der genannten Zündflamme (50) durch Ionisierung erzeugten elektrischen Signal geeignet ist, und wobei sie für die Überprüfung der Anwesenheit/Abwesenheit des genannten elektrischen Signal geeignet ist, wobei die Anwesenheit/Abwesenheit des genannten elektrischen Signal mit der Anwesenheit/Abwesenheit der Zündflamme in Beziehung steht.

2. Vorrichtung nach dem Anspruch 1, **dadurch gekennzeichnet, dass** sie Mittel (12) zur automatischen Anzündung der Brennstoffmischung bei der Düse (9) umfasst, um eine Zündflamme (50) zu erzeugen.

3. Vorrichtung nach dem Anspruch 2, **dadurch gekennzeichnet, dass** die Mittel (11) zur Erfassung der Anwesenheit der genannten Zündflamme (50) und die Mittel (12) zur Anzündung der genannten Zündflamme (50) das elektrisch leitende Element (24), das den unteren endständigen Abschnitt (24A) aufweist, umfassen,
- wobei das genannte elektrisch leitende Element (24) als Element zur Erfassung der Anwesenheit der Zündflamme beziehungsweise als Element zur Anzündung der genannten Zündflamme wirkt,
- wobei das genannte elektrisch leitende Element (24) mit der Steuerungseinheit (40) verbunden ist und wobei sein oberer endständiger Abschnitt (24B) mit einem Anzündungselement (25) elektrisch verbunden ist, das derart angeordnet ist, dass es in dem unteren Abschnitt (24A) des genannten Elements (24) einen Funke erzeugt, wobei der Funke die aus der Düse (9) des Zuführungselements (7) ausfließende Brennstoffmischung anzündet und dabei die Zündflamme (50) erzeugt,
- und wobei die genannte Steuerungseinheit ein Signal zur Erzeugung des genannten Funkes übermittelt.

4. Vorrichtung nach einem der vorherigen Ansprüche, **dadurch gekennzeichnet, dass** das elektrisch leitende Element (24) ein elektrisch leitendes, stabähnliches Metallelement (24) ist, das mindestens einen unteren endständigen Abschnitt (24A) bei der genannten Düse (9) aufweist.

5. Vorrichtung nach einem der vorherigen Ansprüche, **dadurch gekennzeichnet, dass** der untere endständige Abschnitt (24A) des elektrisch leitenden Elements (24) ein unter der Düse (9) vorhandenes, stabähnliches Metallelement ist; wobei der genannte untere Abschnitt (24A) innerhalb eines Schachtelements (32) vorhanden ist, das an der Unterseite offen ist.

6. Vorrichtung nach einem der vorherigen Ansprüche, **dadurch gekennzeichnet, dass** der untere endständige Abschnitt (24A) des elektrisch leitenden Elements (24) ein unter der Düse (9) vorhandenes, stabähnliches Metallelement ist; wobei der genannte untere Abschnitt (24A) innerhalb eines Schachtelements (32) vorhanden ist, das an der Unterseite offen ist, um die Durchfluss der Zündflamme zu ermöglichen, als sie anwesend ist,
- wobei das genannte Schachtelelement einen geerdeten Anzündungsabschnitt (35) umfasst, das, als die genannte Zündflamme nicht anwesend ist und als eine Hochspannung zu dem genannten stabähnlichen Abschnitt (24A) zugeführt wird, derart angeordnet ist, dass es einen Funke zwischen dem End (24C) des genannten stabähnlichen Abschnitts und dem genannten Abzündungsabschnitt (35A) schlägt, so dass es die aus der Düse (9) ausfließende Brennstoffmischung anzündet.

7. Vorrichtung nach einem der vorherigen Ansprüche, **dadurch gekennzeichnet, dass** der untere endständige Abschnitt (24A) des elektrisch leitenden Elements (24) ein unter der Düse (9) vorhandenes, stabähnliches Metallelement ist; wobei der genannte untere Abschnitt (24A) innerhalb eines Schachtelements (32) vorhanden ist, das an der Unterseite offen ist, um die Durchfluss der Zündflamme zu ermöglichen, wobei das genannte Schachtelelement an der Unterseite eine Öffnung für die Zündflamme umfasst, wobei die genannte Öffnung an der Unterseite durch eine Bodenwand (32B) begrenzt ist, die zu einer Achse (L) einer rohrförmigen Seitenwand des genannten Schachtelelement (32) um einem Winkel zwischen 0° 90° schräg ist, und/oder wobei das genannte Schachtelelement mit der Düse (9) verbunden ist, so dass es ein einziges endständiges Element (27) bildet.

8. Vorrichtung nach einem der vorherigen Ansprüche, **dadurch gekennzeichnet, dass** der untere endständige Abschnitt (24A) des elektrisch leitenden Elements (24) koaxial zu dem rohrförmigen Element (7) bewegbar ist, so dass er in der Lage ist, seine Stellung relativ zu einem endständigen Abschnitt (2A) des genannten rohrförmigen Elements (7) anzupassen.

9. Vorrichtung nach einem der vorherigen Ansprüche, **dadurch gekennzeichnet, dass** die Brennstoffmischung für die Zündflamme (50) eine Mischung von brennbarem Gas und Luft ist, wobei das Verhältnis zwischen Gas und Luft bei der Düse (9) nahe dem typischen stöchiometrisch Gas/Luft Verhältnis des genannten Gases ist.

10. Vorrichtung nach einem der vorherigen Ansprüche, **dadurch gekennzeichnet, dass** das mindestens ein Zuführungselement für den inneren Durchfluss der Brennstoffmischung ein hohles, rohrförmiges, geradliniges, längliches Element (7) aufweist, das an einem unteren Ende (8) ein die Düse (9) umfassendes endständiges Element (27) zur Ausströmung der die Zündflamme (50) zuführenden Brennstoffmischung umfasst,
- wobei die Düse koaxial zu der Längsachse (L) des genannten länglichen Elements (7) ist,
- wobei das elektrisch leitende Element (24) der Anzündungsmittel (12) und/oder der Erfassungsmittel (11) koaxial zu der Längsachse (L) des genannten länglichen Elements (7) ist,
- wobei das elektrisch leitende Element (24) die genannte Düse (9) durchdringt und einen an der Unterseite aus der genannten Düse herausragenden Abschnitt umfasst,
- wobei das genannte stabähnliches Metallelement (24) teilweise innerhalb des genannten länglichen Elements (7) aufgenommen ist,
- wobei das genannte stabähnliches Metallelement (24) elektrisch getrennt von der inneren Wand (7B) des genannten länglichen Elements (7) ist.

11. Brennschneidsystem umfassend eine Brennschneidanlage (1) und eine Vorrichtung (2), nach einem der Ansprüche 1-10, die derart angeordnet ist, dass sie eine Zündflamme erzeugt, um die genannte Brennschneidanlage anzuzünden.

12. System nach dem Anspruch 11, **dadurch gekennzeichnet, dass** sie an einem führungs gerät angeschlossen ist, um den System in eine Stellung zu bringen, die der Stellung des darüberstehenden zu schneidenden Elements entspricht, und um das System zu bewegen und den schnitt zu realisieren.

13. Stranggussanlage, **dadurch gekennzeichnet, dass** sie eine Brennschneidsystem nach dem Anspruch 11 umfasst.

14. Verfahren zur Benutzung einer Vorrichtung, die derart angeordnet ist, dass sie eine Zündflamme (50) zur Anzündung einer Brennschneidanlage (1) nach einem der vorherigen Ansprüche 1-10 erzeugt, **dadurch gekennzeichnet, dass** die genannte Vorrichtung eine Steuerungseinheit (40) umfasst, die Steuerungs- und Verarbeitungsmittel zur Aufnahme eines Signals aus Flammenerfassungsmittel (11) umfasst, um nach dem Wert des genannten Signals die Anwesenheit/Abwesenheit der genannten Zündflamme zu überprüfen, wobei die genannten Steuerungs- und Verarbeitungsmittel in Ermangelung der Zündflamme überprüfen können, ob das brennbare Gas zu der genannten Zündflamme-Vorrichtung zugeführt wird, und:
- wenn die Überprüfung positiv ist, betätigen sie mindestens einmal Anzündungsmittel (12), um die genannte Zündflamme automatisch wiederzuzünden,
- wenn die Überprüfung negativ ist, erzeugen sie ein erstes Alarmsignal,
wobei die genannten Steuerungs- und Verarbeitungsmittel überprüfen ob die Anzündungsmittel (12) in der Lage waren, die genannte Zündflamme anzuzünden: Wenn das nicht möglich war, sperren sie die Gaszuführung zu der Zündflamme-Vorrichtung und erzeugen ein zweites Alarmsignal.

## Revendications

1. Dispositif (2) agencé pour générer une flamme pilote (50) pour allumer un dispositif d'oxycoupage (1), du type comprenant :
- au moins un élément tubulaire allongé, comprenant à une première extrémité une buse pour la sortie d'un mélange de combustible, où ledit élément est approprié pour alimenter jusqu'à ladite buse (9) le mélange de combustible, pour alimenter ladite flamme pilote (50) générée au niveau de ladite buse,
**caractérisé en ce qu'**il comprend aussi:
- des moyens (11) pour détecter automatiquement la présence de ladite flamme pilote (50),
- et une unité de commande (40),
- lesdits moyens (11) pour détecter automatiquement la présence de ladite flamme pilote (50) comprenant un élément électriquement conducteur (24) présentant une portion terminale inférieure (24A),
- ladite portion terminale inférieure (24A) étant prévue dans une position correspondante avec ladite buse (9), de façon à être frappée et entourée par ladite flamme pilote (50),
- ladite unité de commande (40) étant connectée auxdits moyens (11) pour détecter automatiquement la présence de ladite flamme pilote (50),
- et ladite unité de commande (40) étant appropriée pour recevoir un signal électrique généré moyennant ionisation par ladite flamme pilote (50) dans ladite portion terminale (24A) dudit élément (24) et étant appropriée pour vérifier la présence/absence dudit signal électrique, dont la présence/absence est liée à la présence/absence de la flamme pilote.

2. Dispositif selon la revendication 1, **caractérisé en ce qu'**il comprend des moyens (12) pour allumer automatiquement le mélange de combustible au niveau de la buse (9) pour générer une flamme pilote (50).

3. Dispositif selon la revendication 2, **caractérisé en ce que** les moyens (11) pour détecter la présence de ladite flamme pilote (50) et les moyens (12) pour allumer ladite flamme pilote (50) comprennent l'élément électriquement conducteur (24) présentant la portion terminale inférieure (24A),
- ledit élément électriquement conducteur (24) agissant alternativement en tant qu'élément pour détecter la présence de la flamme pilote ou en tant qu'élément pour allumer ladite flamme pilote,
- ledit élément électriquement conducteur (24) étant connecté à l'unité de commande (40) et ayant sa portion terminale supérieure (24B) électriquement connectée à un élément d'allumage (25) agencé pour générer dans la portion inférieure (24A) dudit élément (24) une étincelle qui génère la flamme pilote (50) en allumant le mélange de combustible en sortie de la buse (9) de l'élément d'alimentation (7),
- et ladite unité de commande transmettant un signal pour générer ladite étincelle.

4. Dispositif selon l'une des revendications précédentes, **caractérisé en ce que** l'élément électriquement conducteur (24) est un élément de métal en forme de barre électriquement conducteur (24) présentant au moins une portion terminale inférieure (24A) au niveau de ladite buse (9).

5. Dispositif selon l'une des revendications précédentes, **caractérisé en ce que** la portion terminale inférieure (24A) de l'élément électriquement conducteur (24) est un élément de métal en forme de barre prévu au-dessous de la buse (9); ladite portion inférieure (24A) étant prévue à l'intérieur d'un élément à boîte (32) qui est ouvert dans sa partie inférieure.

6. Dispositif selon l'une des revendications précédentes, **caractérisé en ce que** la portion terminale inférieure (24A) de l'élément électriquement conducteur (24) est un élément de métal en forme de barre prévu au-dessous de la buse (9); ladite portion inférieure (24A) étant prévue à l'intérieur d'un élément à boîte (32), qui est ouvert dans sa partie inférieure pour permettre le passage de la flamme pilote, lorsque présente,
- ledit élément à boîte comprenant une portion d'allumage (35) connectée à la terre et qui, lorsque ladite flamme pilote n'est pas présente et qu'une haute tension est alimentée à ladite portion en forme de barre (24A), est agencée pour créer une étincelle entre l'extrémité (24C) de ladite portion en forme de barre et ladite portion d'allumage (35A), de façon à allumer le mélange de combustible à la sortie de la buse (9).

7. Dispositif selon l'une des revendications précédentes, **caractérisé en ce que** la portion terminale inférieure (24A) de l'élément électriquement conducteur (24) est un élément de métal en forme de barre prévu au dessous de la buse (9); ladite portion inférieure (24A) étant prévue à l'intérieur d'un élément à boîte (32), qui est ouvert dans sa partie inférieure pour permettre le passage de la flamme pilote, ledit élément à boîte comprenant dans sa partie inférieure une ouverture pour la flamme pilote, ladite ouverture étant limitée dans sa partie inférieure par une paroi de base (32B) inclinée par rapport à un axe (L) d'une paroi latérale tubulaire dudit élément à boîte (32) à un angle entre 0° et 90° et/ou ledit élément à boîte étant connecté à la buse (9) de façon à former un seul élément terminal (27).

8. Dispositif selon l'une des revendications précédentes, **caractérisé en ce que** la portion terminale inférieure (24A) de l'élément électriquement conducteur (24) est mobile coaxialement à l'élément tubulaire (7) de façon à pouvoir adapter sa position par rapport à une portion terminale (2A) dudit élément tubulaire (7).

9. Dispositif selon l'une des revendications précédentes, **caractérisé en ce que** le mélange de combustible pour la flamme pilote (50) comprend un mélange d'un gaz combustible et d'air, le rapport entre gaz et air au niveau de la buse (9) étant proche du rapport stoechiométrique gaz/air caractéristique dudit gaz.

10. Dispositif selon l'une des revendications précédentes, **caractérisé en ce que** l'au moins un élément d'alimentation comprend, pour le passage du mélange de combustible en son intérieur, un élément tubulaire creux rectiligne allongé (7) comprenant à une extrémité inférieure (8) un élément terminal (27) comprenant la buse (9) pour la sortie du mélange de combustible qui alimente la flamme pilote (50),
- la buse étant coaxiale à l'axe longitudinal (L) dudit élément allongé (7),
- l'élément électriquement conducteur (24) des moyens d'allumage (12) et/ou des moyens de détection (11) étant coaxial audit axe longitudinal (L) dudit élément allongé (7),
- ledit élément électriquement conducteur (24) compénétrant ladite buse (9) et comprenant une portion (24A) saillante de la partie inférieure de ladite buse,
- ledit élément en forme de barre (24) étant partiellement logé à l'intérieur dudit élément allongé (7),
- ledit élément en forme de barre (24) étant électriquement isolé de la paroi intérieure (7B) dudit élément allongé (7).

11. Système d'oxycoupage comprenant un dispositif d'oxycoupage (1) et un dispositif (2), selon l'une des revendications 1-10, agencé pour générer une flamme pilote pour allumer ledit dispositif d'oxycoupage.

12. Système selon la revendication 11, **caractérisé en ce qu'**il est associé à un dispositif de mise en mouvement pour guider le système dans une position correspondante avec l'élément à couper au-dessus du même et pour le déplacer pour procéder à la coupure.

13. Installation de coulée continue **caractérisée en ce qu'**elle comprend un système d'oxycoupage selon la revendication 11.

14. Méthode d'emploi d'un dispositif agencé pour générer une flamme pilote (50) pour allumer un dispositif d'oxycoupage (1), selon l'une des revendications précédentes 1-10, **caractérisée en ce que** ledit dispositif comprend une unité de commande (40) comprenant des moyens de commande et de traitement pour recevoir un signal de moyens de détection de flamme (11), pour ainsi vérifier, sur la base de la valeur de ce signal, la présence/absence de ladite flamme pilote, lesdits moyens de commande et de traitement étant capables de vérifier, en l'absence de la flamme pilote, si le gaz combustible est alimentè audit dispositif de flamme pilote, et:
- si ladite vérification est positive, ils activent des moyens d'allumage (12) au moins une fois, pour rallumer automatiquement ladite flamme pilote,
- dans le cas contraire, si ladite vérification est négative, ils génèrent un premier signal d'alarme,
lesdits moyens de commande et de traitement vérifiant si les moyens d'allumage (12) ont été à même d'allumer ladite flamme pilote, et si cette vérification est négative, ils bloquent l'alimentation du gaz au dispositif de flamme pilote et ils génèrent un deuxième signal d'alarme.
